# EUROPEAN PATENT APPLICATION

(11) **EP 4 397 177 A1**
(43) Date of publication of application: **10.07.2024**
(21) Application number: 23217220.5
(22) Date of filing: 15.12.2023
(51) Int. Cl.: A01K 1/01, A01K 1/00

(54) **DEVICE AND METHOD FOR REMOVING CAT EXCREMENT AND SMELL FROM CAT LITTER**

(30) Priority: 27.12.2022 CN 202211690309
(71) Applicant: Guangzhou Bochong Technology Co., Ltd., Guangzhou City (CN)
(72) Inventor: WANG, LI, Guangzhou (CN); WU, HANWU, Guangzhou (CN); WANG, DONGLIANG, Guangzhou (CN)
(74) Representative: Kieffer, Valentin

(57) **Abstract**

The invention discloses a device and a method for removing cat excrement and bad smell from cat litter. The method includes closing a first opening of the device by a closing member; the rotatable cavity rotates from the initial position in the first direction, the second opening is opened, and cat litter containing cat excrement is loaded into the screen; cat excrement is discharged by the screen through the second opening, and cat litter is screened out; the rotatable cavity rotates in the direction opposite to the first direction, the screened cat litter is returned, and the second opening is closed at the same time; air fluid enters the rotatable chamber through the third opening, and the air fluid in the rotatable chamber is discharged through the fourth opening. According to the device for removing the cat excrement and the bad smell from the cat litter, the cat excrement and the peculiar smell are removed through an improved cat excrement and peculiar smell distinguishing treatment method, and no danger is caused to pets.

## Description

### Technical field

The present invention relates to the field of pet products, and in particular to a device and method for removing cat excrement and smell from cat litter.

### Background technique

A traditional cat litter box is a shallow box-shaped device with an opening on the top, and cat litter is placed in it. The cat can excrete inside the box after entering the litter box.

These open litter boxes have several disadvantages: first, they offer little ability to absorb or control smells from animal waste, and for this reason, these types of litter boxes are often placed further away from the living room; The cat litter box requires the breeder to regularly remove animal excrement, change the cat litter from time to time, and clean the cat litter box occasionally; thirdly, due to the cat's own habits, it likes to dig, kick or otherwise spread cat litter in the cat box. It is common for large amounts of litter or excrement to be kicked out of the litter box; and, because the low sides of the litter box cannot block the cat, depending on the individual cat's habits, the cat will sometimes "stagger the litter box" and get in the litter box. The outer edges of the cat's claws are covered in excrements; in addition, the bottom of the cat's claws will bring out a large amount of cat litter from the litter box.

All these shortcomings will lead to frequent cleaning of the cat litter box and the surrounding ground, which requires a lot of time from the owners. At the same time, if the pet excrement is not processed in time, the smell it emits will seriously affect the indoor air environment, which will bring a lot of inconvenience to the daily life of the breeders.

Some cat litter boxes on the market are able to deal with or circumvent some of these problems: for example, some litter boxes include higher side walls and tops and have openings at one or either end to allow cats to enter and exit the box. In addition, some litter boxes contain desmellant materials to help mask the smell from animal waste; new cat litter technology has also developed "clumping" cat litter, which forms clumps around the excreted liquid, making it easier for the breeder to clean it out.

While the litter boxes and new cat litters described above address some of the issues discussed above, they do not solve them all.

CN111837971B discloses a cat excrement cleaning device and method. The cat excrement cleaning device includes a rotating accommodating member and a sand screening assembly. The rotating accommodating member is used to accommodate cat litter; the sand screening assembly is arranged in the rotating accommodating member. The sand screening assembly includes a first sand screening member and a second sand screening member. The first sand screening member can overlap with the second sand screening member to form a sand loading trough, or be closed to form a sand screening cavity, thereby completing the screening of cat excrement.

However, there is still room for improvement, and even though the above-mentioned device known from CN111837971B realizes automatic cleaning of cat excrement, the cat excrement is not isolated from the surrounding environment, so the unpleasant smell can still diffuse into the surrounding environment.

CN113163730A discloses a garbage collection device for processing animal feces. The garbage collection device includes a device base including a container and a chamber located on the base, the chamber being rotatable about a rotation axis. When the chamber is in the first position, the chamber opening can serve as an entrance for animals to enter the chamber for excreting animal waste, and when the chamber is in the second position, the chamber opening can serve as a trash opening for dumping animal waste into a container middle. However, cat excrement is not isolated from the surrounding environment, especially connected to the cat litter box, so the smell of cat excrement still affects the indoor air environment and becomes increasingly pungent over time.

### Contents of the invention

In order to achieve the above and other purposes, and according to the purposes of the present invention, the present invention provides a device and method for removing cat excrement and smell from cat litter. The device removes cat excrement and smell through an improved method of separating cat excrement and smell without posing a danger to pets.

The device for removing cat excrement and smell from cat litter includes a rotatable chamber, the chamber is rotatable about a rotation axis, and the rotatable chamber is used to accommodate cat litter. The rotatable chamber has a first opening on the outer wall of the chamber and suitable for animals to enter and exit, and a closing member disposed on the first opening.

The first opening is suitable for animals to enter and exit, and the closing member is used to at least partially close the first opening. The closing member may be a sliding door, and the closing member at least partially closes the first opening by sliding. Alternatively, the closing member may be a door curtain, and the closing member at least partially closes the first opening by rolling. Alternatively, the closing member may be a rotary opening and closing member, and the closing member at least partially closes the first opening by rotating. Alternatively, the closing member may be a magnetic opening and closing member, and the closing member at least partially closes the first opening through magnetic attraction.

The rotatable chamber has a second opening defined in its outer surface, the second opening can selectively process and pass waste materials therethrough, and the rotatable chamber can open or close the second opening by rotation.

The rotatable chamber includes a screen connected to the second opening to screen out objects larger than a predetermined size, including cat waste.

The rotatable chamber has a third opening for intake of air and a fourth opening for exhaust of air defined in its outer surface.

The third opening is used for air circulation, the third opening is provided with a ventilation fan, and the air outlet is directed into the rotatable chamber along the third opening.

The device for removing cat excrement and smell from cat litter also includes an excrement collection bin. When the screen discharges the cat excrement through the second opening, the excrement is collected. The collection bin is in air fluid communication with the second opening.

The device for removing cat excrement and smell from cat litter also includes a support base for supporting the entire device.

The support base includes an elastic valve. When the screen discharges the cat excrement through the second opening, the elastic valve cuts off the air flow between the excrement collection bin and the second opening.

The device for removing cat waste and smells from cat litter also includes an integrated sensor. The integrated sensor detects the presence or absence of an animal; provides illumination in low light conditions when an animal is detected moving in front of the device. One or more presence signals are provided to the microprocessor controller inside the integrated sensor; the microprocessor controller inside the integrated sensor can process the sensor signal and start different setting programs according to different signals.

Optionally, the integrated sensor is a combination of a weight sensor, a thermal imaging sensor, a light sensor, an LED lighting lamp, and a microprocessor controller.

A weight sensor is used to detect the presence or absence of an animal in the device; a thermal imaging sensor is used to detect the presence or absence of an animal moving into the device. The light sensor is used to detect the brightness of the surrounding environment; the LED lighting uses the signal feedback of the light sensor to determine whether to turn on for lighting; the microprocessor controller is used to process the sensor signal and start based on different signals.

The integrated sensor is at least one of a weight sensor, a microwave radar, an ultrasonic sensor, an infrared sensor, a camera, a thermal imaging sensor, a light sensor, a millimetre wave radar, a laser sensor, an LED lighting, a microprocessor controller, or two of them. A combination of them is also possible.

The device for removing cat excrement and smell from cat litter also includes a bottom housing connected to the rotatable chamber.

Optionally, the device for removing cat excrement and smell from cat litter also includes a top housing and a bottom housing, wherein a garbage bag storage box is provided on the side of the bottom housing for storing garbage bags.

Optionally, an exhaust pipe is provided at the rear end of the bottom housing, and the exhaust pipe is connected to the fourth opening through an internal hose.

The method for removing cat waste and smell includes:
S1. The closing member closes the first opening;
S2. The rotatable chamber rotates in a first direction from the initial position, opens the second opening and loads the cat litter containing cat excrement into the screen;
S3. The sieve mesh discharges the cat excrement through the second opening, and the cat litter is screened out;
S4. The rotatable chamber rotates in the opposite direction to the first direction, returns the screened cat litter, and at the same time closes the second opening;
S5. Air enters the rotatable chamber through the third opening, and the fourth opening discharges the air from the rotatable chamber.

The present invention provides a method for removing cat excrement and smell from cat litter, including a device for removing cat excrement and smell from cat litter.

The cat litter is placed in the rotatable chamber of the device. When the cat discharges its excrement into the cat litter and exits the rotatable chamber, the cat litter containing the excrement is screened and cleaned by various components.

Specifically: the rotatable chamber is closed, and then the rotatable chamber is rotated in a first direction from the initial position, driving the screen to screen out the cat excrement and transfer it to the excrement collection bin by gravity; and then the rotatable chamber is rotated in the first direction. The chamber rotates and resets in the opposite direction of the first direction, and finally, under the action of the ventilation fan, the smell is discharged through the two ventilation openings.

The equipment and method provided by the present invention for removing animal excrement and smell from cat litter are, firstly, time-saving: the equipment can automatically clean cat litter and smell, reducing the owner's need to manually dig feces and replace cat litter. This can save the owner a lot of time and energy.

Second, cost-effective: The device may also be cost-effective in the long run because it reduces the need to replace the waste frequently, and this cost-effectiveness adds up over time.

Third, reduce smells: This device can help reduce unpleasant smells in homes by automatically removing excrement and helping to expel residual smells.

To reduce smells, cat litter cleaning devices use a combination of mechanisms.

First, the rotatable chamber is designed to screen out waste and transfer it by gravity to a collection bin, which helps remove major sources of smells from the waste.

In addition, the device has a third opening for air circulation, through which the ventilation of the third opening exhausts residual smells.

This helps reduce the concentration of smelly gases in the chamber, thereby helping to reduce the overall smell in the environment.

What's more, the rotatable chamber's enclosed design helps isolate the rotatable chamber from the rest of the room, helping to prevent the spread of smells and dust.

This is especially useful if the unit is located in a frequently used area of the home, such as a living room or bathroom.

By isolating the area of the unit from the rest of the home, the unit can help reduce the risk of unpleasant smells spreading throughout the house.

Fourth aspect, improved hygiene: By removing feces from the cat litter, the device helps keep the cat litter clean and hygienic, thereby helping to reduce the risk of cats getting sick or infected.

Fifth aspect, promote cats to develop good habits of using the device: The device can also help encourage cats to develop good defecation habits by providing them with a clean and comfortable place to go to the bathroom.

This helps reduce the risk of accidents outside the litter box or improper cleanup.

### Description of the drawings

The invention and its advantages will be better understood by studying the present invention by way of non-limiting examples and by the detailed description of specific embodiments shown in the appended drawings, in which:

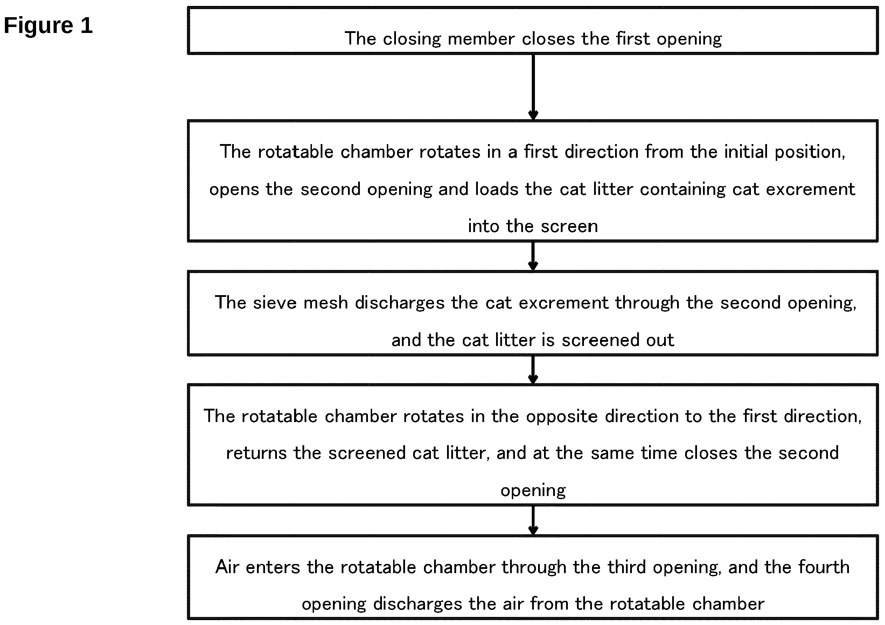

Figure 1 is a schematic flow chart of Embodiment 1 of the present invention.
Figure 2 is a schematic flow chart of Embodiment 2 of the present invention.
Figure 3 is a schematic flow chart of Embodiment 3 of the present invention.
Figure 4 is a schematic flow chart of Embodiment 4 of the present invention.
Figure 5 is an exploded view of a device for removing cat waste and smell from cat litter according to the present invention.
Figure 6 is a front view of the main components of the device for removing cat excrement and smell from cat litter according to the present invention.
Figure 7 is a side view of the main components of the device for removing cat excrement and smell from cat litter according to the present invention.
Figure 8 is a perspective view of the main components of the device for removing cat excrement and smell from cat litter according to the present invention.
Figure 9 is an exploded side view of the device for removing cat excrement and smell from cat litter according to the present invention.
Figure 10 is an exploded front view of the device for removing cat excrement and smell from cat litter according to the present invention.
Figure 11 is a front view of the self-cleaning cat litter box with the closing member in an open state according to the embodiment of the present invention.

### Detailed description

Reference is made to the accompanying drawings, in which the same component numbers represent the same components, and the principles of the present invention are exemplified by implementation in a suitable environment.

The following description is based on the specific embodiments of the invention illustrated and should not be construed as limiting the invention to other specific embodiments not described in detail here.

The word "embodiment" as used in this specification is meant to serve as an example, example, or illustration.

Furthermore, the article "a" or "an" as used in this specification and the appended claims may generally be construed to mean "one or more" unless otherwise specified or the context clearly dictates a singular form.

In the description of the present invention, it should be understood that the terms "centre", "longitudinal", "transverse", "length", "width", "thickness", "upper", "lower", "front", " The directions indicated by "back", "left", "right", "vertical", "horizontal", "top", "bottom", "inside", "outside", "clockwise", "counterclockwise" etc. or The positional relationship is based on the orientation or positional relationship shown in the drawings, which is only for the convenience of describing the present invention and simplifying the description, and does not indicate or imply that the device or element referred to must have a specific orientation, be constructed and operated in a specific orientation, Therefore, it should not be construed as a limitation of the present invention.

In the description of the present invention, it should be noted that, unless otherwise clearly stated and limited, the terms "set", "connected" and "connected" should be understood in a broad sense. For example, it can be a fixed connection or a detachable connection. Connection, or integral connection; it can be mechanical connection, electrical connection or mutual communication; it can be direct connection, or indirect connection through an intermediary, it can be the internal connection of two elements or the interaction of two elements relation.

For those of ordinary skill in the art, the specific meanings of the above terms in the present invention can be understood according to specific circumstances.

In addition, unless otherwise expressly provided and limited, "above" or "below" a first feature to a second feature may include that the first and second features are in direct contact, or may include that the first and second features are not in direct contact.

Furthermore, the term "above" the first feature on the second feature include that the first feature is directly above and diagonally above the second feature, or means that the first feature is higher in level than the second feature.

"Below", "under" and "beneath" the first feature is the second feature includes the first feature being directly below and diagonally below the second feature, or means that the first feature is less horizontally than the second feature.

The following disclosure provides many different embodiments or examples of various structures for implementing the invention. In order to simplify the disclosure of the present invention, the components and arrangements of specific examples are described below. Of course, they are only examples and are not intended to limit the invention.

Furthermore, the present invention may repeat reference numbers and/or reference letters in different examples, such repetition being for purposes of simplicity and clarity and does not itself indicate a relationship between the various embodiments and/or arrangements discussed.

In addition, the present invention provides examples of various specific processes and materials, but one of ordinary skill in the art will recognize the application of other processes and/or the use of other materials.

### Example 1

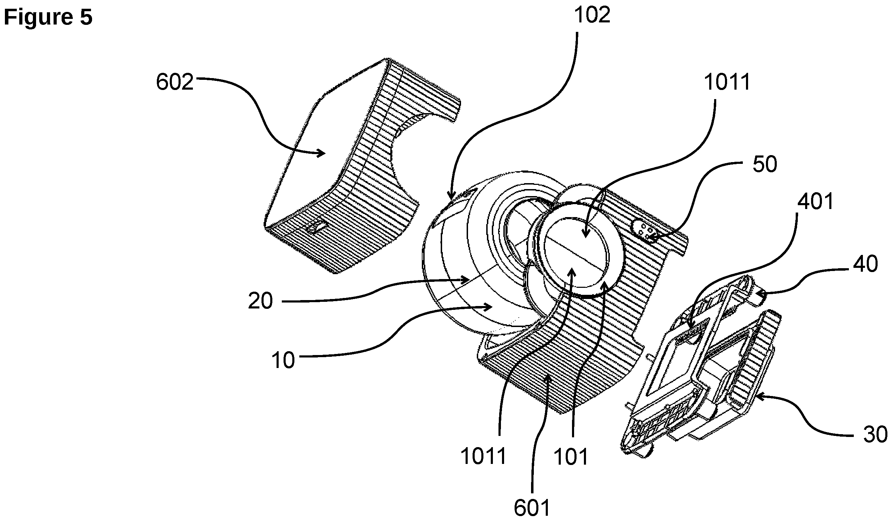

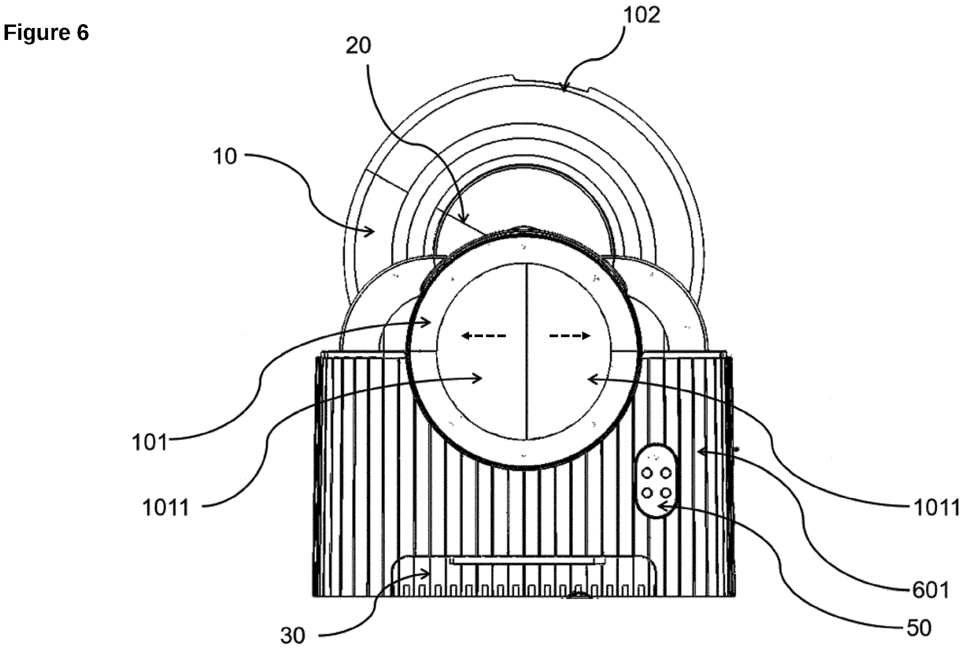

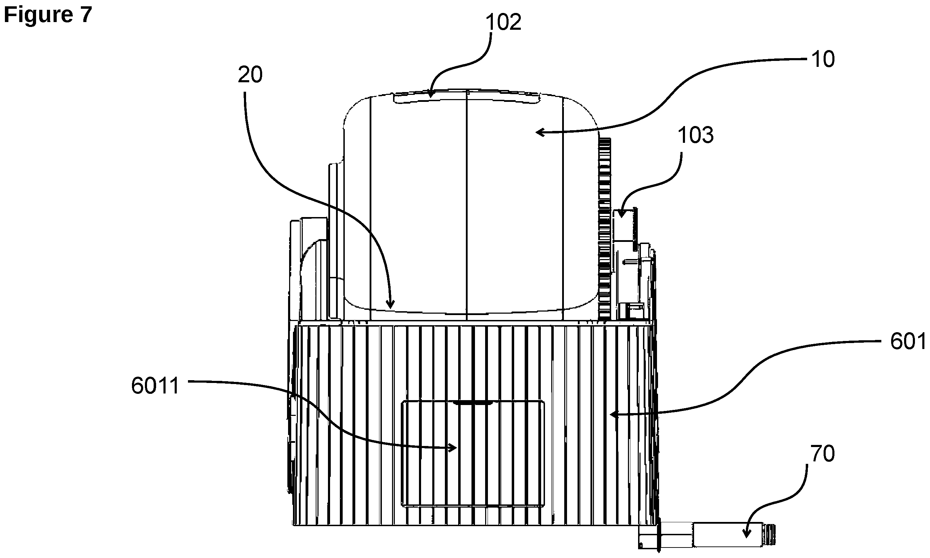

This embodiment provides a device for removing cat excrement and smell from cat litter. As shown in Figure 5, the device for removing cat excrement and smell from cat litter includes a chamber 10 is rotatable around a rotation axis, and the rotatable chamber 10 is used to accommodate cat litter. As shown in FIGS. 5 to 6, the rotatable chamber 10 has the first opening 101 defined in its outer surface and the closing member 1011 disposed on the first opening 101. An opening 101 is suitable for animals to enter and exit, and the closing member 1011 is used to close the first opening 101. As shown in Figure 7, the rotatable chamber 10 has the second opening 102 defined in its outer surface, and is opened by rotation in order to selectively process waste materials passing therethrough.

A top housing 601 is used to cover the rotatable chamber 10 and a bottom housing 602 is used to support the rotatable chamber 10. A screen 20 is connected to the second opening 102 to screen out objects larger than a predetermined size, including cat excrement. The rotatable chamber 10 has the third opening 103 and the fourth opening 104 defined in its outer surface.

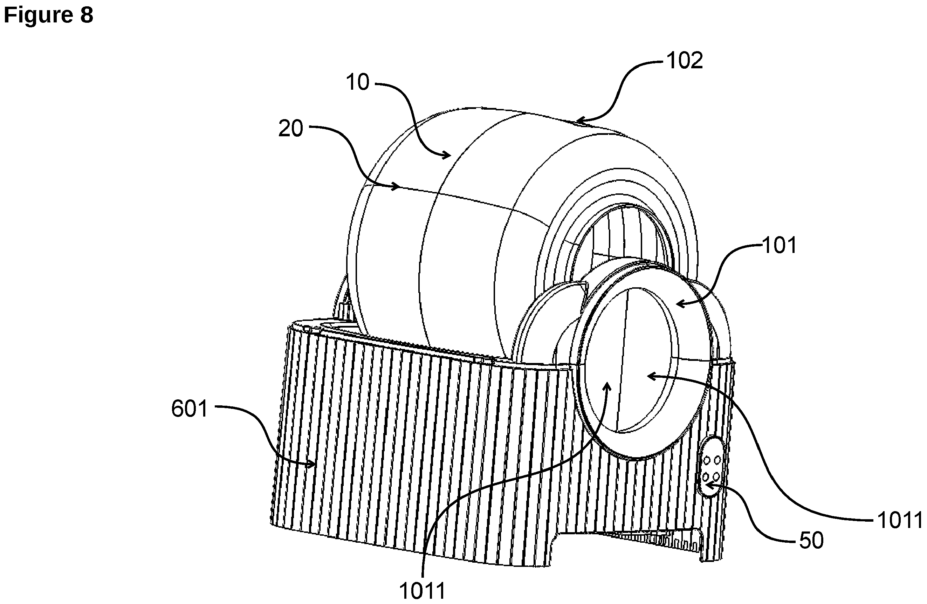

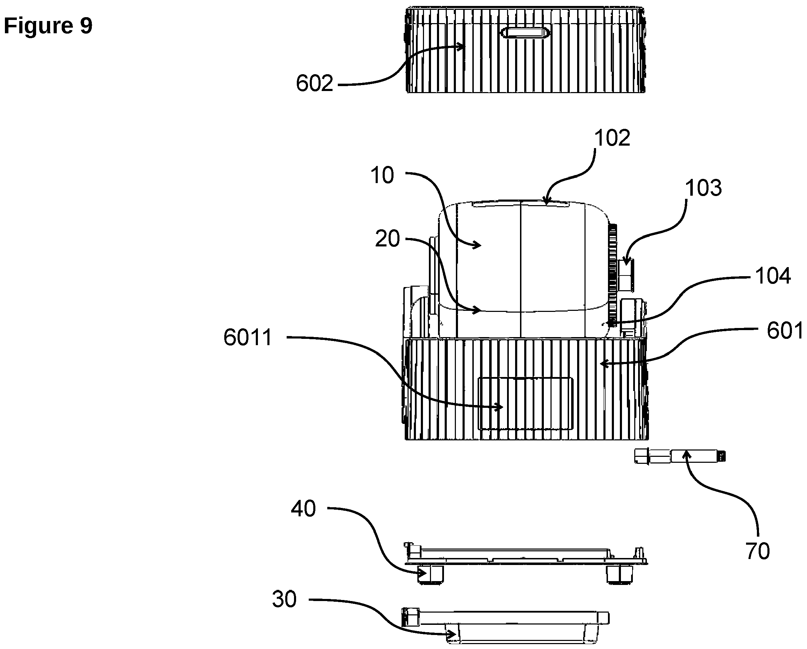

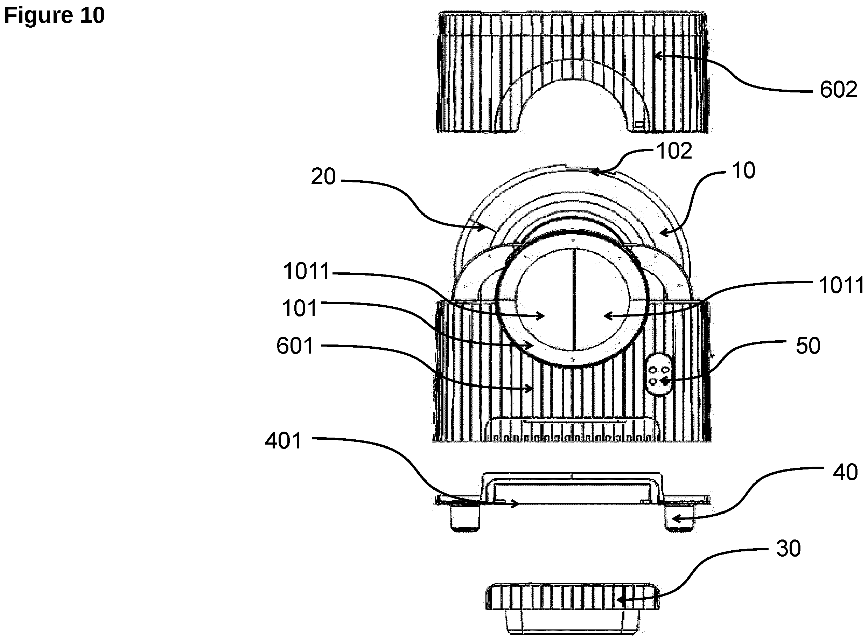

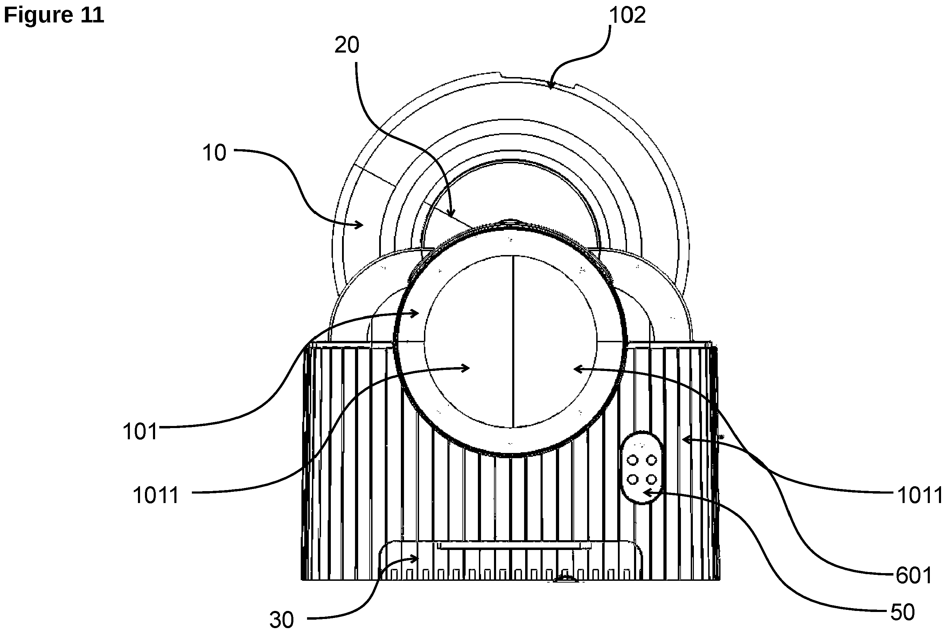

As shown in Figures 8 to 11, when the first opening 101 and the second opening 102 are closed, the third opening 103 takes in air fluid, and the fourth opening 104 discharges the air fluid, so that undesirable smells are removed from the rotatable chamber 10. The closing member 1011 is a sliding door, and the closing member 1011 closes the first opening 101 by sliding. The rotatable chamber 10 has the second opening 102 defined in its outer surface, the second opening 102 can selectively process and pass the waste material therein, the rotatable chamber 10 can rotate to open or close the second opening 102. The rotatable chamber 10 includes the screen 20 connected to the second opening 102 to screen out objects larger than a predetermined size, including cat excrement. The rotatable chamber 10 has a third opening 103 for suction of air fluid and a fourth opening 104 defined in its outer surface to drain air fluid. The third opening 103 is provided with a ventilation fan, and the air outlet is directed along the third opening 103 into the rotatable chamber 10. The ventilation fan can be used to blow fresh air into the rotatable chamber 10 or to extract air from the rotatable chamber 10.

The device for removing cat excrement and smell from cat litter also includes an excrement collection bin 30. When the screen 20 discharges the cat excrement through the second opening 102, the excrement collection bin 30 is in air fluid communication with the second opening 102.

The device for removing cat excrement and smell from cat litter also includes the support base 40 for supporting the entire device.

The support seat 40 includes an elastic valve 401. When the screen 20 discharges the cat excrement through the second opening 102, the elastic valve 401 cuts off the air flow between the excrement collection bin 30 and the second opening 102.

A method for removing cat excrement and smells from cat litter is provided. After the integrated sensor 50 detects that the cat leaves the rotatable chamber 10, the cleaning procedure is started:
S1. The closing member 1011 closes the first opening 101;
S2. The rotatable chamber 10 rotates in a first direction from the initial position, and the cat litter containing cat excrement is loaded into the screen 20. Under the rotation of the rotatable chamber 10, the elastic valve 401 included in the support base 40 opens, and the second opening 102 opens. The excrement collection bin 30 is in air fluid communication with the second opening 102.
S3. The screen 20 sifts out the cat litter under the rotation of the rotatable chamber 10, and discharges cat excrement to the excrement collection bin 30 through the second opening 102 under the action of gravity.
S4. The rotatable chamber 10 rotates at a sufficient angle in the first direction and then stops rotating. The rotatable chamber 10 rotates at the same angle in the direction opposite to the first direction, and the screened cat litter returns, and at the same time, the elastic valve 401 contained in the support base 40 is closed under the reverse rotation of the rotatable chamber 10, and the second opening 102 is closed. The elastic valve 401 cuts off the air fluid communication between the excrement collection bin 30 and the second opening 102.
S5. Air enters the rotatable chamber 10 through the third opening 103, and the air in the rotatable chamber 10 is discharged through the fourth opening 104.

Finally, the closing member 1011 on the first opening 101 is reopened.

In this embodiment, in the first aspect, the rotatable chamber 10 is formed into a relatively closed space by closing the first opening 101 and the second opening 102, so that air circulation is performed, and cat excretion is removed. During the process of removing excrements and smells, the rotatable chamber 10 is relatively isolated from the user's indoor space to prevent smells and dust in the cat litter from spreading into the user's indoor space.

Secondly, during the process of cleaning up cat excrement and smell, the rotatable chamber 10 remains sealed at all times to prevent pets from entering the running rotatable chamber 10 and causing potential safety hazards.

Thirdly, during the entire cleaning process of removing cat excrement and smell from cat litter, the rotatable chamber 10 maintains a relatively closed space, reducing air circulation and cat litter rolling friction noise, thereby providing pets with a more quiet space.

### Example 2

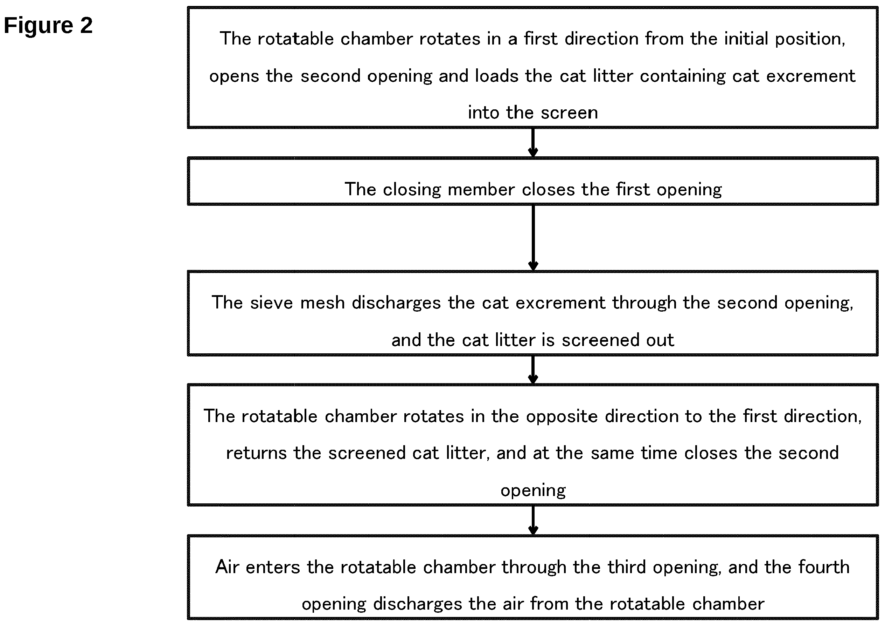

Reference is made to figure 2, which is a schematic flow chart of a method for removing cat excrement and smell from cat litter according to embodiment 2 of the present invention.

Only the differences between embodiment 2 and embodiment 1 will be described below, and the similarities will not be described again.

The closing member 1011 is a door curtain, and the closing member 1011 closes the first opening 101 by rolling up.

The method includes the following steps. After the integrated sensor 50 detects that the cat leaves the rotatable chamber 10, the cleaning procedure is started:
S1. The rotatable chamber 10 rotates in a first direction from the initial position, and the cat litter containing cat excrement is loaded into the screen 20. Under the rotation of the rotatable chamber 10, the elastic valve 401 included in the support base 40 opens, and the second opening 102 opens. The excrement collection bin 30 is in air fluid communication with the second opening 102.
S2. The closing member 1011 closes the first opening 101.
S3. The screen 20 sifts out the cat litter under the rotation of the rotatable chamber 10 and discharges cat excrement to the excrement collection bin 30 through the second opening 102 under the action of gravity.
S4. The rotatable chamber 10 rotates at a sufficient angle in the first direction and then stops rotating. The rotatable chamber 10 rotates at the same angle in the direction opposite to the first direction, and the screened cat litter returns, and at the same time, the elastic valve 401 contained in the support base 40 is closed under the reverse rotation of the rotatable chamber 10, and the second opening 102 is closed. The elastic valve 401 cuts off the air fluid communication between the excrement collection bin 30 and the second opening 102.
S5. Air enters the rotatable chamber 10 through the third opening 103, and air in the rotatable chamber 10 is discharged through the fourth opening 104.

Finally, the closing member 1011 on the first opening 101 is reopened.

### Example 3

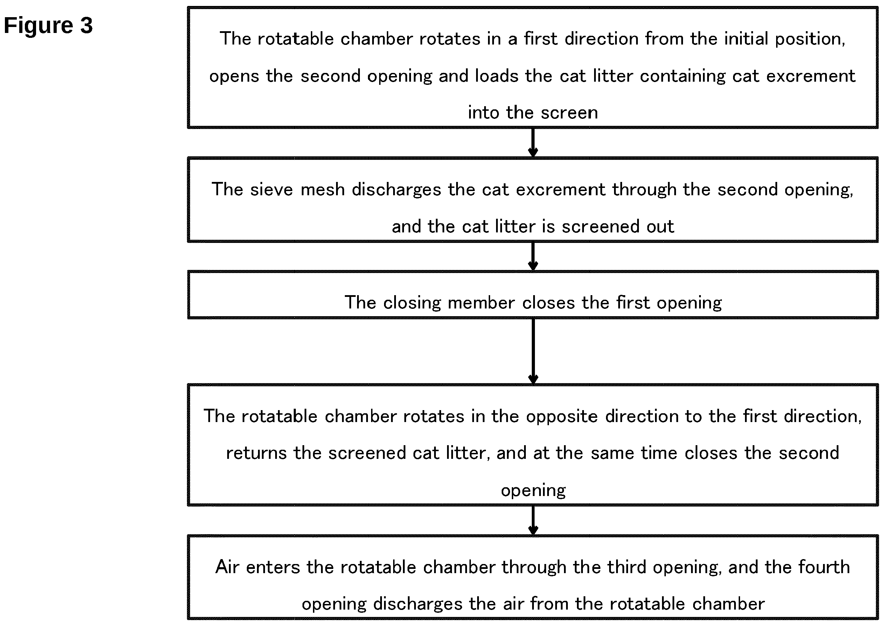

Reference is made to FIG. 3, which is a schematic flow chart of a method for removing cat excrement and smell from cat litter according to embodiment 3 of the present invention.

Only the differences between embodiment 3 and embodiment 1 will be described below, and the similarities will not be described again.

The closing member 1011 is a rotary opening and closing member, and the closing member 1011 closes the first opening 101 by rotating.

The method includes the following steps:
S1. The rotatable chamber 10 rotates in a first direction from the initial position, and the cat litter containing cat excrement is loaded into the screen 20. Under the rotation of the rotatable chamber 10, the elastic valve 401 included in the support base 40 opens, and the second opening 102 opens. The excrement collection bin 30 is in air fluid communication with the second opening 102.
S2. The screen 20 sifts out the cat litter under the rotation of the rotatable chamber 10 and discharges cat excrement to the excrement collection bin 30 through the second opening 102 under the action of gravity.
S3. The closing member 1011 closes the first opening 101.
S4. The rotatable chamber 10 rotates at a sufficient angle with the first direction and then stops rotating. The rotatable chamber 10 rotates at the same angle in the opposite direction with the first direction, and the screened cat litter is returned, and at the same time, the elastic valve 401 contained in the support base 40 is closed under the reverse rotation of the rotatable chamber 10, and the second opening 102 is closed. The elastic valve 401 cuts off the air fluid communication between the excrement collection bin 30 and the second opening 102.
S5. The air fluid enters the rotatable chamber 10 through the third opening 103, and the air fluid in the rotatable chamber 10 is discharged through the fourth opening 104.

Finally, the closing member 1011 on the first opening 101 is reopened.

### Example 4

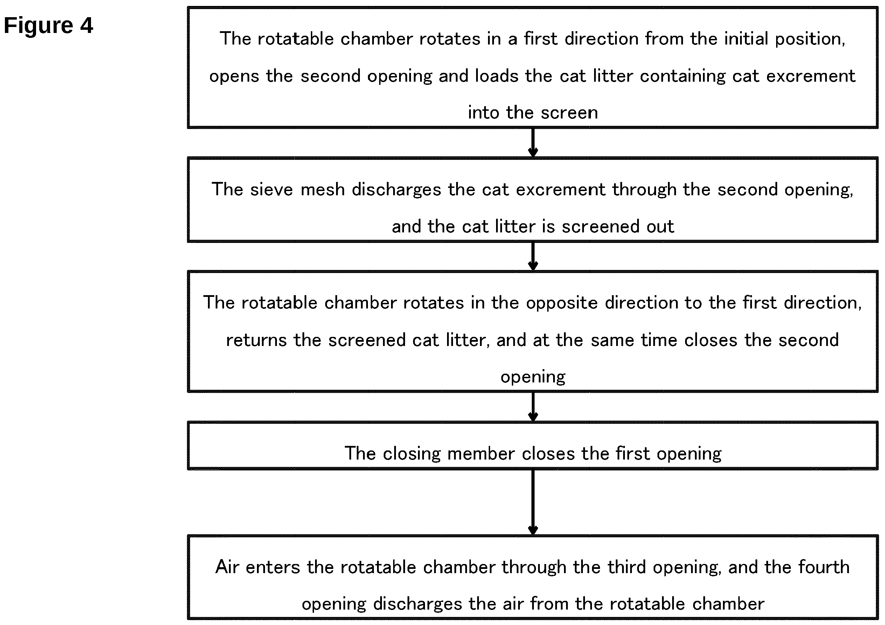

Reference is made to Figure 4, which is a schematic flow chart of a method for removing cat excrement and smell from cat litter according to Embodiment 4 of the present invention.

Only the differences between embodiment 4 and embodiment 1 will be described below, and the similarities will not be described again.

The closing member 1011 is a magnetic opening and closing member, and the closing member 1011 closes the first opening 101 through magnetic attraction.

The method includes the following steps. After the integrated sensor 50 detects that the cat leaves the rotatable chamber 10, the cleaning procedure is started:
S1. The rotatable chamber 10 rotates in the first direction from the initial position, and the cat litter containing cat excrement is loaded into the screen 20. Under the rotation of the rotatable chamber 10, the elastic valve 401 included in the support base 40 opens and the second opening 102 opens. The excrement collection bin 30 is in air fluid communication with the second opening 102;
S2. The screen 20 sifts out the cat litter under the rotation of the rotatable chamber 10, and discharges cat excrement to the excrement collection bin 30 through the second opening 102 under the action of gravity.
S3. The rotatable chamber 10 rotates at a sufficient angle with the first direction and then stops rotating. The rotatable chamber 10 rotates at the same angle in the opposite direction with the first direction, and the screened cat litter is returned, and at the same time, the elastic valve 401 contained in the support base 40 is closed under the reverse rotation of the rotatable chamber 10, and the second opening 102 is closed. The elastic valve 401 cuts off the air fluid communication between the excrement collection bin 30 and the second opening 102.
S4. The closing member 1011 closes the first opening 101;
S5. The air fluid enters the rotatable chamber 10 through the third opening 103, and the air fluid in the rotatable chamber 10 is discharged through the fourth opening 104.

Finally, the closing member 1011 on the first opening 101 is reopened.

The invention has been described with respect to one or more embodiments.

However, it will be obvious to those skilled in the art that various changes and modifications can be made without departing from the scope of the invention as defined in the claims.

Although the invention has been described above with reference to some embodiments, various modifications may be made and equivalents may be substituted for components thereof without departing from the scope of the invention.

In particular, as long as there is no structural conflict, various features in the various embodiments disclosed in the present invention can be combined with each other in any way. This specification does not provide an exhaustive description of these combinations. In consideration of omitting space and saving resources.

Therefore, the present invention is not limited to the specific embodiments disclosed herein, but includes all technical solutions falling within the scope of the claims.

## Claims

1. A method for removing cat excrement and smell from cat litter with a device for removing cat excrement and smell from cat litter,
the device for removing cat excrement and smell from cat litter includes:
• a rotatable chamber for containing cat litter, wherein the rotatable chamber has a first opening defined in its outer surface and a closing member disposed on the first opening, the first opening is suitable for animals to enter and exit, and the closing member is used to at least partially seal the first opening; the rotatable chamber having a second opening defined in its outer surface, the rotatable chamber opening or closing the second opening by rotation in order to selectively process waste materials passing therethrough;
• a screen connected to the second opening to screen out objects larger than a predetermined size, including cat excrement;
wherein the rotatable chamber has a third opening defined in its outer surface, the third opening being for air circulation,
with the following steps:
• the closing member closes the first opening;
• the rotatable chamber rotates in a first direction from an initial position, opens the second opening and loads the cat litter containing cat excrement into the screen;
• the sieve mesh discharges the cat excrement through the second opening, and the cat litter is screened out;
• the rotatable chamber rotates in a direction opposite to the first direction to return the screened cat litter while closing the second opening;
• the third opening circulates air within the rotatable chamber.

2. Method according to claim 1,
**characterized in that** the closing member closes the first opening before the third opening circulates air within the rotatable chamber.

3. Method according to claim 1,
wherein the closing member is a sliding door, and the closing member at least partially closes the first opening by sliding.

4. Method according to claim 1,
wherein the closing member is a door curtain, and the closing member at least partially closes the first opening by rolling up.

5. Method according to claim 1,
wherein the closing member is a rotating opening and closing member, and the closing member at least partially closes the first opening by rotating
or
the closing member is a magnetic opening and closing member, and the closing member at least partially closes the first opening through magnetic attraction.

6. Method according to claim 1,
**characterized in that** the device for removing cat excrement and smell from cat litter further includes an integrated sensor and a microprocessor control device; wherein the integrated sensor is used to detect the presence or absence of the animal and provide one or more presence signals to the microprocessor controller; the microprocessor controller can process the sensor signal and start different setting programs according to different signals; wherein the integrated sensor is at least one of a weight sensor, microwave radar, ultrasonic sensor, infrared sensor, camera, thermal imaging sensor, light sensor, millimetre wave radar, laser sensor, LED lighting, microprocessor controller, or a combination of two or more of these.

7. Method according to claim 1,
**characterized in that** the device for removing cat excrement and smell from cat litter also includes an excrement collection bin, wherein when the screen discharges the cat excrement through the second opening, the excrement collection bin is in air fluid communication with the second opening.

8. Method according to claim 7,
**characterized in that** the device for removing cat excrement and smell from cat litter further includes an upper support seat including an elastic valve, wherein when the screen discharges the cat excrement through the second opening, the elastic valve cuts off air fluid communication between the excrement collection bin and the third opening.

9. Method according to claim 1,
wherein the rotatable chamber further has a fourth opening defined in its outer surface, and the third opening is used to suck in air, and the fourth opening is used to discharge air.

10. Device for removing cat excrement and smell from cat litter, including:
• a rotatable chamber for containing cat litter, the rotatable chamber having a first opening defined in its outer surface and a closure member disposed on the first opening, the first opening being adapted for entry and exit of an animal, the closure member being at least partially closed the first opening, the rotatable chamber having a second opening defined in its outer surface, the rotatable chamber opening or closing the second opening by rotation in order to selectively process waste materials passing therethrough;
• a screen connected to the second opening to screen out objects larger than a predetermined size, including cat excrement;
wherein the rotatable chamber has third and fourth openings defined in an outer surface thereof and wherein, when the first opening and the second opening are closed, the third opening circulates the air in the rotatable chamber so that the smell in the rotatable chamber is removed.
